# FASCICULE DE BREVET EUROPEEN

(11) **EP 3 167 110 B1**
(45) Date de publication et mention de la délivrance du brevet: **06.06.2018**
(21) Numéro de dépôt: 15727022.4
(22) Date de dépôt: 11.06.2015
(51) Int. Cl.: D07B 1/06, B60C 9/00, C08K 5/098, C08K 5/17, D07B 1/16

(54) **CÂBLE GOMMÉ IN SITU COMPRENANT UNE COMPOSITION DE GOMMAGE COMPRENANT UN INHIBITEUR DE CORROSION**
IN-SITU-GUMMIERTES KABEL MIT GUMMIERTER ZUSAMMENSETZUNG MIT EINEM KORROSIONSINHIBITOR
CABLE RUBBERIZED IN SITU COMPRISING A RUBBERIZING COMPOSITION COMPRISING A CORROSION INHIBITOR

(30) Priorité: 12.06.2014 FR 1455344
(43) Date de publication de la demande: 17.05.2017
(73) Titulaire: Compagnie Générale des Etablissements Michelin, 63000 Clermont-Ferrand (FR)
(72) Inventeur: BELIN, Lionel, F-63040 Clermont-Ferrand Cedex 9 (FR); SALGUES, Nathalie, F-63040 Clermont-Ferrand Cedex 9 (FR); NOEL, Sébastien, F-63040 Clermont-Ferrand Cedex 9 (FR)
(74) Mandataire: Louret, Sylvain
(86) Numéro de dépôt international: PCT/EP2015/063019
(87) Numéro de publication internationale: WO 2015/189314

(56) Documents cités:
- EP-A1- 1 717 350
- EP-A1- 2 423 381
- JP-A- 2005 307 368

## Description

L'invention concerne un câble monotoron gommé in situ, un câble multi-torons gommé in situ ainsi que l'utilisation de tels câbles pour le renforcement d'un produit semi-fini en caoutchouc et un pneumatique comprenant de tels câbles.

Un pneumatique radial comporte de manière connue une bande de roulement, deux bourrelets inextensibles, deux flancs reliant les bourrelets à la bande de roulement et une ceinture, ou armature de sommet, disposée circonférentiellement entre l'armature de carcasse et la bande de roulement. L'armature de carcasse et/ou de sommet est constituée de manière connue d'au moins une nappe (ou "couche") de caoutchouc renforcée par des éléments de renforts tels que des câbles, généralement du type métalliques dans le cas de pneumatiques pour véhicules industriels porteurs de lourdes charges.

Pour le renforcement des armatures de carcasse et/ou de sommet, on utilise généralement des câbles métalliques monotoron constitués d'une couche centrale ou noyau et d'une ou plusieurs couches de fils concentriques disposées autour de ce noyau. Les câbles à trois couches les plus utilisés sont essentiellement des câbles de construction M+N+P, formés d'un noyau de M fil(s), M variant de 1 à 4, entourée d'une couche intermédiaire de N fils, N variant typiquement de 3 à 12, elle-même entourée d'une couche externe de P fils, P variant typiquement de 8 à 20, l'ensemble pouvant être éventuellement fretté par un fil de frette externe enroulé en hélice autour de la couche externe. On utilise également des câbles métalliques multitorons comprenant plusieurs torons tels que décrits ci-dessus.

De manière bien connue, ces câbles métalliques sont soumis, notamment dans le cas de l'armature de carcasse, à des contraintes importantes lors du roulage des pneumatiques, notamment à des flexions ou variations de courbure répétées induisant au niveau des fils des frottements, notamment par suite des contacts entre couches adjacentes, et donc de l'usure, ainsi que de la fatigue ; ils doivent donc présenter une haute résistance aux phénomènes dits de "fatigue-fretting".

Concernant l'armature de sommet, un pneumatique de véhicule industriel lourd, notamment de génie civil, est soumis à de nombreuses agressions. En effet, le roulage de ce type de pneumatique se fait habituellement sur un revêtement accidenté conduisant parfois à des perforations de la bande de roulement. Ces perforations permettent l'entrée d'agents corrosifs, par exemple l'air et l'eau, qui oxydent les éléments de renfort métalliques de l'armature de sommet, notamment des nappes de sommet, et réduisent considérablement la durée de vie du pneumatique.

Il est particulièrement important en outre que les éléments de renfort soient imprégnés autant que possible par le caoutchouc, que cette matière pénètre dans tous les espaces situés entre les fils et/ou les torons constituant les câbles. En effet, si cette pénétration est insuffisante, il se forme alors des canaux ou capillaires vides, le long et à l'intérieur des câbles, et les agents corrosifs tels que l'eau ou même l'oxygène de l'air, susceptibles de pénétrer dans les pneumatiques par exemple à la suite de coupures de leur bande de roulement, cheminent le long de ces canaux vides. La présence de cette humidité joue un rôle important en provoquant de la corrosion et en accélérant les processus de dégradation ci-dessus (phénomènes dits de "fatigue-corrosion" et d'agression du sommet), par rapport à une utilisation en atmosphère sèche.

Tous ces phénomènes de fatigue et d'agressions sont à l'origine d'une dégénérescence progressive des propriétés mécaniques des câbles et peuvent affecter, pour les conditions de roulage les plus sévères, la durée de vie de ces derniers.

Pour pallier les inconvénients ci-dessus, la demande WO 2005/071157 a proposé des câbles à trois couches de construction 1+M+N, en particulier de construction 1+6+12, dont une des caractéristiques essentielles est qu'une gaine constituée d'une composition de caoutchouc, dite de gommage, recouvre au moins la couche intermédiaire constituée des M fils, le noyau (ou fil unitaire) du câble pouvant être lui-même recouvert ou non de caoutchouc. Grâce à cette architecture spécifique, le câble présente d'excellentes propriétés d'endurance en fatigue-fretting et de résistance aux agressions qui sont notablement améliorées par rapport aux câbles de l'art antérieur. La longévité des pneumatiques et celle de leurs armatures de carcasse et/ou de sommet sont ainsi très sensiblement améliorées.

Toutefois, malgré la présence de la composition de gommage entre les fils, lors de l'utilisation du pneumatique, des agents corrosifs, par exemple de l'eau, peuvent pénétrer, dans les armatures, au contact des éléments de renfort métalliques et les corroder par l'intermédiaires des fils et/ou torons externes, dégradant ainsi rapidement leurs propriétés mécaniques et d'adhésion à la composition de caoutchouc adjacente à ces éléments de renfort métalliques, dite composition de calandrage.

L'utilisation d'un inhibiteur de corrosion permet, d'une part, de prévenir l'action des agents corrosifs grâce à la formation d'un film protecteur autour de l'élément de renfort métallique et, d'autre part, par adsorption sur l'élément de renfort métallique, de ralentir voire de stopper l'action corrosive des agents corrosifs sur et au sein de l'élément de renfort métallique.

On connait du document JP05177772 une composition comprenant un dérivé de la famille des triazines en tant qu'inhibiteur de corrosion. Toutefois, un tel composé est relativement cher. De plus, on souhaite autant que possible limiter la quantité à employer de composés pouvant avoir un impact environnemental.

On connait du document JP2005307368 un câble comprenant une composition de gommage entre les fils, cette composition de gommage comprenant un agent inhibiteur de corrosion volatil, en particulier une combinaison de dicyclohexyle ammonium nitrate et diisopropyle ammonium nitrate.

Ainsi, l'invention a pour but de proposer un câble gommé in situ avec une composition de caoutchouc de gommage comprenant un inhibiteur de corrosion efficace et environnementalement neutre.

A cet effet, l'invention a pour objet un câble monotoron gommé in situ comprenant:
- une couche interne du câble comprenant N1 fil(s) interne(s),
- une couche externe du câble comprenant N3 fils externes enroulés en hélice autour de la couche interne du câble,
- une composition de caoutchouc disposée entre la couche interne du câble et la couche externe du câble,
remarquable en ce que la composition de caoutchouc comprend un composé de formule (I) ou (II) ou un sel de ce composé: 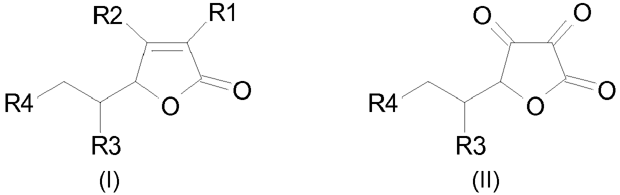 dans laquelle chaque groupe R1, R2, R3 et R4 représente indépendamment l'un de l'autre, un groupe -OH, -O-Alkyl ou -O(C)O-Alkyl.

Le composé de formule (I) ou (II) ou le sel de ce composé forme un inhibiteur de corrosion.

Avantageusement, la composition de caoutchouc de gommage selon l'invention permet de réduire voire de supprimer le risque de corrosion du câble métallique. De plus, le fait d'ajouter un composé de formule (I) ou (II) ou un sel de ce composé dans la composition de caoutchouc disposée entre la couche interne du câble et la couche externe du câble permet de réduire la quantité de composé tout en obtenant un effet anticorrosif similaire, voire meilleur que lorsque ledit composé est disposé dans la composition de caoutchouc adjacente de calandrage.

D'une part, les composés de formule (I) ou (II) ou les sels de ces composés captent les agents corrosifs avant qu'ils n'atteignent les fils protégés par la composition de gommage.

D'autre part, la composition permet également de limiter l'action corrosive des agents corrosifs sur les fils. En effet, on suppose que les composés de formule (I) ou (II) ou les sels de ces composés sont transportés par l'agent corrosif, par exemple l'eau, jusqu'aux fils où ils s'adsorbent sur une surface externe des fils que la composition de gommage protège et bloquent l'action des agents corrosifs.

Les composés formule (I) ou (II) ou les sels de ces composés sont relativement neutres à l'égard de l'environnement.

Les composés de formules (I) et (II) peuvent être présent sous forme de l'un ou l'autre des diastéréoisomères possible.

La composition de caoutchouc peut se trouver sous forme crue ou vulcanisée.

Dans un mode de réalisation préférentiel, les fils sont revêtus d'une couche de cuivre ou de laiton ce qui, entre autres, permet d'améliorer l'adhésion du caoutchouc au fil par sulfuration de cette couche lors de la cuisson. Les composés de formule (I) ou (II) ou les sels de ces composés n'inhibent pas cette sulfuration et donc ne nuisent pas à l'adhésion entre l'élément de renfort métallique et la composition de caoutchouc.

Le câble monotoron gommé in situ selon l'invention peut également comprendre une ou plusieurs des caractéristiques ci-dessous, considérées individuellement ou selon toutes les combinaisons techniquement possibles :
- R1=R2 ; et/ou
- R1 et R2 représentent le groupe -OH; et/ou
- R3=R4 ; et/ou
- R3 et R4 représentent le groupe -OH ; et/ou
- le composé de formule (I) est l'acide ascorbique et de préférence, l'acide L-ascorbique; et/ou
- la composition de caoutchouc comprend au plus 2 pce borne incluse, de préférence au plus 1 pce borne incluse et plus préférentiellement au plus 0,7 pce borne incluse du composé de formule (I) ou (II) ou un sel de ce composé.

Dans un mode de réalisation, la composition de caoutchouc est présente dans chacun des capillaires situés entre le ou les N1 fil(s) interne(s) de la couche interne et les N3 fils externes de la couche externe.

Dans un autre mode de réalisation, le câble comprend en outre une couche intermédiaire du câble comprenant N2 fils intermédiaires enroulés en hélice autour de la couche interne du câble, les N3 fils externes de la couche externe du câble étant enroulés en hélice autour de la couche intermédiaire du câble.

De préférence, la composition de caoutchouc est présente dans chacun des capillaires situés entre le ou les N1 fil(s) interne(s) de la couche interne et les N2 fils intermédiaires de la couche intermédiaire.

Encore plus préférentiellement, la composition de caoutchouc est présente dans chacun des capillaires situés entre les N2 fils intermédiaires de la couche intermédiaire et les N3 fils externes de la couche externe.

L'invention se rapporte également à un câble multi-torons gommé in situ, comprenant au moins toron étant un câble monotoron gommé in situ selon l'invention.

Dans un mode de réalisation préféré, le câble multi-torons gommé in situ comprend :
- une couche interne du câble comprenant T1 toron(s) interne(s),
- une couche externe du câble comprenant T2 torons externes enroulés en hélice autour de la couche interne du câble,
- au moins un des torons interne et/ou externe étant un câble monotoron gommé in situ selon l'invention.

Le câble multi-torons gommé in situ peut également comprendre une ou plusieurs des caractéristiques ci-dessous, considérées individuellement ou selon toutes les combinaisons techniquement possibles :
- chaque toron externe est un câble monotoron gommé in situ selon l'invention ; et/ou
- chaque toron interne est un câble monotoron gommé in situ selon l'invention ; et/ou
- le câble multi-torons comprend une composition de caoutchouc disposée entre la couche interne des T1 toron(s) interne(s) du câble et la couche externe des T2 torons externes du câble, la composition de caoutchouc comprenant un composé de formule (I) ou (II) ou un sel de ce composé: 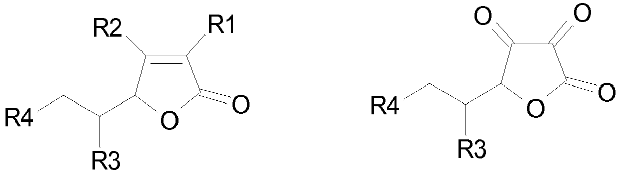 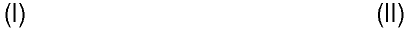
dans laquelle chaque groupe R1, R2, R3 et R4 représente indépendamment l'un de l'autre, un groupe -OH, -O-Alkyl ou -O(C)O-Alkyl.

L'invention concerne aussi un câble multi-torons gommé in situ, comprenant:
- une couche interne du câble comprenant T1 toron(s) interne(s),
- une couche externe du câble comprenant T2 torons externes enroulés en hélice autour de la couche interne du câble,
- une composition de caoutchouc disposée entre la couche interne du câble et la couche externe du câble, la composition de caoutchouc comprenant un composé de formule (I) ou (II) ou un sel de ce composé: 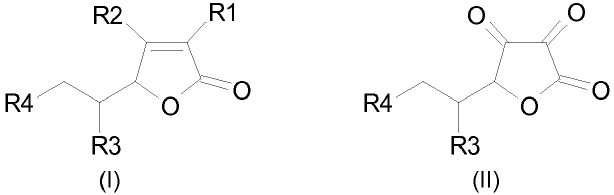 dans laquelle chaque groupe R1, R2, R3 et R4 représente indépendamment l'un de l'autre, un groupe -OH, -O-Alkyl ou -O(C)O-Alkyl.

Les avantages évoqués ci-dessus pour le câble monotoron gommé in situ s'appliquent *mutatis mutandis* aux câbles multitorons décrits ci-dessus.

L'invention concerne également l'utilisation d'un câble monotoron gommé in situ selon l'invention ou d'un câble multi-torons gommé in situ selon l'invention pour le renforcement d'un article ou produit semi-fini en caoutchouc, par exemple un pneumatique.

L'invention se rapporte en outre à un pneumatique comprenant un câble monotoron gommé in situ selon l'invention ou à un câble multi-torons gommé in situ selon l'invention.

L'invention sera mieux comprise à la lecture de la description qui va suivre donnée à titre d'exemple non limitatif de mise en oeuvre de celle-ci, et à l'examen des figures annexées sur lesquelles :
- la figure 1 est une représentation schématique d'une coupe transversale d'un câble monotoron de construction 1+6, gommé in situ, selon l'invention,
- les figure 2 à 4 sont des représentations schématiques de coupes transversales de câbles monotoron de construction 1+6+12, gommés in situ, selon différents modes de réalisation de l'invention, et
- les figures 5 à 10 sont des représentations schématiques de coupes transversales de câbles multi-torons de construction 1+6, gommés in situ, et selon différents modes de réalisation de l'invention et comprenant plusieurs torons de structure 1+6+12.

Dans la présente description, sauf indication expresse différente, tous les pourcentages (%) indiqués sont des % en poids. Le sigle « pce » signifie parties en poids pour cent parties d'élastomère.

D'autre part, on entend par câble gommé in situ au sens de l'invention, un câble gommé de l'intérieur, pendant sa fabrication même, donc à l'état brut de fabrication, par une composition de caoutchouc dite de gommage. En d'autres termes, au moins un des capillaires ou interstices (les deux termes interchangeables désignant les vides, espaces libres en l'absence de gomme de remplissage) formés par les fils ou torons adjacents est rempli, au moins en partie (de manière continue ou non selon l'axe du câble), par la composition de gommage de telle manière que pour toute longueur de câble de 2 cm, chaque capillaire comporte au moins un bouchon de gomme.

L'invention se rapporte à un câble monotoron gommé in situ C comprenant au moins une couche interne du câble CT1 et une couche externe du câble CT3. La couche interne du câble CT1 comprend N1 fil(s) interne(s) avec N1 supérieur ou égal à 1. La couche externe du câble CT3 comprend N3 fils externes enroulés en hélice autour de la couche interne du câble CT1.

En particulier la couche interne CT1 peut comporter un ou plusieurs fils (i.e. N1 varie de 1 à 3). La couche externe CT3 peut comprendre de dix à quatorze fils (i.e. N3 varie de 5 à 7).

Le câble selon l'invention est gommé in situ et comprend donc une composition de caoutchouc dite de gommage 20 disposée entre la couche interne du câble CT1 et la couche externe du câble CT3.

Le caoutchouc (ou indistinctement « l'élastomère », les deux étant considérés comme synonymes) de la composition de gommage 20 est préférentiellement un élastomère diénique, c'est-à-dire par définition un élastomère issu au moins en partie (c'est-à-dire un homopolymère ou un copolymère) de monomère(s) diène(s) (i.e., monomère(s) porteur(s) de deux doubles liaisons carbone-carbone, conjuguées ou non).

De manière particulièrement préférentielle, l'élastomère diénique de la composition est choisi dans le groupe des élastomères diéniques constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les compositions peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) a sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16387.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyles, nécessitant l'utilisation d'un agent de couplage pour établir la liaison entre la charge et l'élastomère.

Le taux de charge renforçante totale (noir de carbone et/ou charge inorganique renforçante telle que silice) est compris dans un domaine de 5 à 120 pce bornes incluses, plus préférentiellement de 5 à 70 pce bornes incluses et plus préférentiellement également de 5 à 60 pce bornes incluses.

Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice. On pourra ainsi utiliser une seule silice ou un coupage de plusieurs silices différentes.

Lorsqu'une charge inorganique (par exemple de la silice) est utilisée dans la composition, seule ou en coupage avec du noir de carbone, son taux est compris dans un domaine de 0 à 70 pce bornes incluses, préférentiellement de 0 à 60 pce bornes incluses, en particulier également de 5 à 70 pce bornes incluses, et encore plus préférentiellement cette proportion varie de 5 à 60 pce bornes incluses.

De préférence, la composition de gommage 20 comprend une charge renforçante comprenant majoritairement en poids de la silice et plus préférentiellement comprenant uniquement de la silice. Par majoritairement, on comprend que la proportion en poids de silice est supérieure à la proportion en poids du reste des autres charges renforçantes de la composition, que ces charges soient organiques, comme par exemple le noir de carbone, ou inorganiques.

De façon avantageuse, la composition de gommage 20 comprend au moins 30 pce borne incluse et de préférence au moins 40 pce borne incluse de silice.

De préférence, la composition de gommage 20 comprend des additifs divers.

Les compositions de gommage peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que des anti-oxydants, des agents anti-fatigue, des résines renforçantes telles que des bismaleimides, des accepteurs (par exemple résine phénolique novolaque) ou des donneurs de méthylène (par exemple HMT ou H3M).

Comme présenté ci-dessus, la composition de gommage 20 comprend un inhibiteur de corrosion conforme aux formules (I) ou (II) ou à des sels de ces composés: 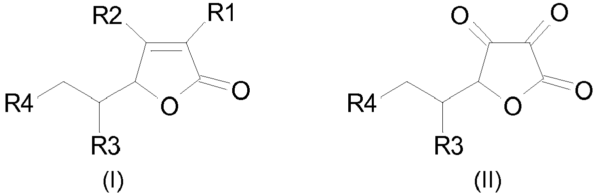 dans laquelle chaque groupe R1, R2, R3 et R4 représente indépendamment l'un de l'autre, un groupe -OH, -O-Alkyl ou -O(C)O-Alkyl.

De préférence, R1 et R2 sont identiques.

Dans le cas où R1 et R2 sont identiques ils sont de préférence un groupe -OH.

Dans un mode de réalisation R3 et R4 sont identiques.

Dans le cas où R1 et R2 sont identiques ils sont de préférence un groupe
-OH.

De préférence, le composé de formule (I) est l'acide ascorbique et plus préférentiellement, l'acide L-ascorbique.

De préférence, la composition de de caoutchouc de gommage 20 comprend au plus 2 pce borne incluse, de préférence au plus 1 pce borne incluse et plus préférentiellement au plus 0,7 pce borne incluse du composé de formule (I) ou (II) ou un sel de ce composé.

De préférence, la composition de gommage 20 comprend un système de réticulation, plus préférentiellement de vulcanisation.

Le système de réticulation, ici de vulcanisation, comprend des agents donneurs de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur.

Avantageusement, l'accélérateur est choisi parmi le tétrabenzylthiuram disulfure (en abrégé "TBZTD") et la famille des sulfénamides constituée par le disulfure de 2-mercaptobenzothiazyle (en abrégé "MBTS"), le N-cyclohexyl-2-benzothiazyle sulfénamide (en abrégé "CBS"), le N,N-dicyclohexyl-2-benzothiazyle sulfénamide (en abrégé "DCBS"), le N-ter-butyl-2-benzothiazyle sulfénamide (en abrégé "TBBS"), le N-ter-butyl-2-benzothiazyle sulfénimide (en abrégé "TBSI") et les mélanges de ces composés.

De façon optionnelle, le système de vulcanisation comprend également un retardateur de vulcanisation tel que le N-(Cyclohexylthio)phthalimide (en abrégé "CTP").

Le soufre ou agent donneur de soufre est utilisé à un taux préférentiel compris entre 0,5 et 10 pce bornes incluses, plus préférentiellement compris entre 0,5 et 8,0 pce bornes incluses et très préférentiellement entre 2,0 et 8,0 pce bornes incluses. L'ensemble des accélérateurs, retardateurs et activateurs de vulcanisation est utilisé à un taux préférentiel compris entre 0,5 et 15 pce bornes incluses. Le ou les activateurs de vulcanisation est ou sont utilisés à un taux préférentiel compris entre 0,5 et 10 pce bornes incluses.

Dans une variante, on pourra envisager de supprimer le système de réticulation, c'est-à-dire de disposer d'une composition de gommage 20 dépourvu d'agents donneurs de soufre, par exemple du soufre et d'activateurs de vulcanisation tels que l'oxyde de zinc et l'acide stéarique.

Par composition dépourvue d'un composé, on comprend que la composition ne comprend pas ce composé introduit volontairement dans la composition et que ce composé, s'il est présent, l'est sous forme de traces liées par exemple au procédé de fabrication de la composition. Par exemple, la composition dépourvue d'un composé comprend ce dernier dans une quantité inférieure ou égale à 0,1 pce et de préférence inférieure ou égale à 0,05 pce.

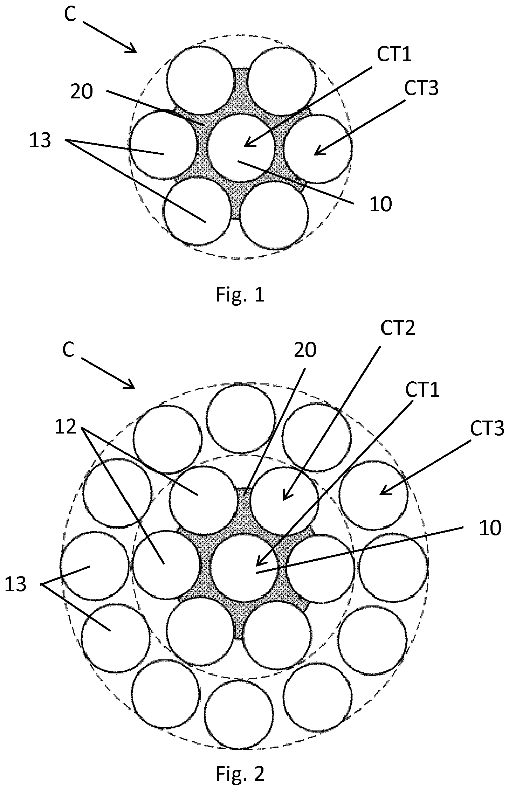

Selon un premier mode de réalisation représenté à la figure 1 d'un câble monotoron gommé in situ C à deux couches, la couche interne CT1 du câble monotoron gommé in situ C comprend un fil interne 10 et la couche externe du câble CT3 comprenant six fils externes 13 enroulés en hélice autour du fil interne.

De préférence, la composition de caoutchouc de gommage 20 est présente dans chacun des capillaires ou interstices situés entre le fil interne de la couche interne CT1 et les six fils externes de la couche externe CT3.

Bien que non représenté, il est possible de prévoir des câbles à deux couches avec par exemple trois fils internes et neuf fils externe.

Selon des modes de réalisation illustrés aux figures 2 à 4 de câbles monotoron gommé in situ à trois couches, le câble monotoron gommée in situ selon l'invention C peut comprendre une couche intermédiaire du câble CT2 comprenant N2 fils intermédiaires. Les N2 fils intermédiaires sont enroulés en hélice autour de la couche interne CT1 du câble et les N3 fils externes de la couche externe CT3 du câble sont enroulés en hélice autour de la couche intermédiaire CT2 du câble.

Dans les modes de réalisation illustrés aux figures 2 à 4, la couche interne CT1 comprend un fil interne 10, la couche intermédiaire CT2 comprend six fils intermédiaires 12 et la couche externe CT3 comprend douze fils externes 13. Les câbles des figures 2 à 4 présentent une structure 1+6+12.

L'invention n'est pas limitée à la configuration illustrée aux figures 2 à 4.

En particulier la couche interne CT1 peut comporter plus de fils, par exemple deux ou trois fils assemblés entre eux (i.e. N1 varie de 1 à 3).

En outre, la couche intermédiaire CT2 peut comprendre cinq à sept fils (i.e. N2 varie de 5 à 7).

Finalement la couche externe CT3 peut comprendre de dix à quatorze fils (i.e. N3 varie de 10 à 14).

Selon le mode de réalisation représenté sur la figure 2, la composition de caoutchouc de gommage 20 est présente dans chacun des capillaires situés entre le fil interne 10 de la couche interne CT1 et les six fils intermédiaires 12 de la couche intermédiaire CT2.

Avantageusement, une telle configuration permet d'assurer une bonne protection contre la corrosion des fils interne(s) et intermédiaires.

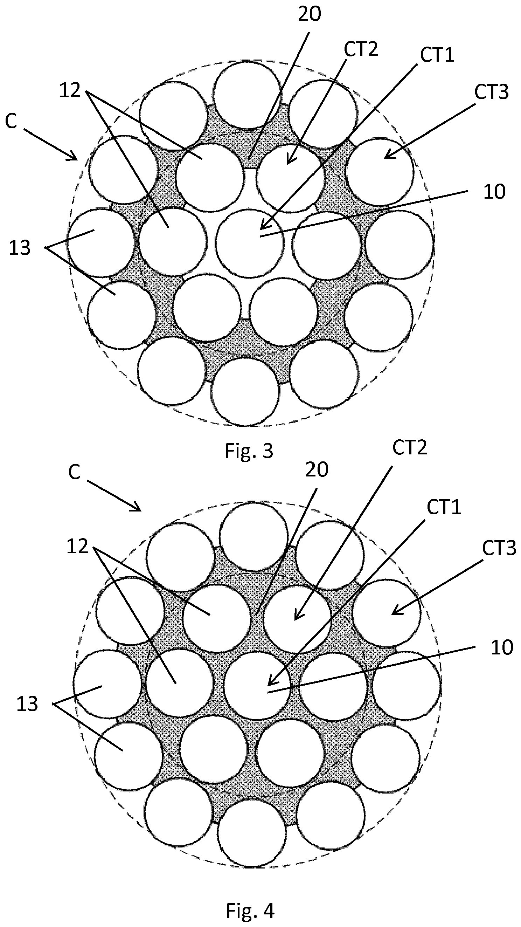

Selon le mode de réalisation représenté sur la figure 3, la composition de caoutchouc degommage 20 est présente dans chacun des capillaires situés entre les six fils intermédiaires 12 de la couche intermédiaire CT2 et les douze fils externes 13 de la couche externe CT3.

Avantageusement, une telle configuration permet d'assurer une bonne protection contre la corrosion des fils intermédiaires et externes. La composition de gommage 20 permet ainsi de former une barrière de protection anticorrosive entre le coeur du câble et l'extérieur.

Comme représenté sur la figure 4, il est également possible de prévoir que la composition de gommage 20 est présente dans chacun des capillaires situés entre le fil interne 10 de la couche interne CT1 et les six fils intermédiaires 12 de la couche intermédiaire CT2 et dans chacun des capillaires situés entre les six fils intermédiaires 12 de la couche intermédiaire CT2 et les douze fils externes 13 de la couche externe CT3.

Avantageusement une telle configuration permet d'assurer une protection maximale des différentes couches du câble contre la corrosion.

L'invention se rapporte également à un câble multi-torons gommé in situ C' comprenant au moins une couche interne du câble CCI et une couche externe du câble CCE du câble.

La couche interne du câble CCI comprend T1 toron(s) interne(s).

La couche externe du câble CCE comprend T2 torons externes enroulés en hélice autour de la couche interne CCI du câble C'.

Chaque toron interne TI et externe TE est un câble monotoron comprenant au moins une couche interne du câble CT1 et une couche externe du câble CT3. La couche interne comprend N1 fil(s) interne(s) et la couche externe comprend N3 fils externes enroulés en hélice autour de la couche interne du câble.

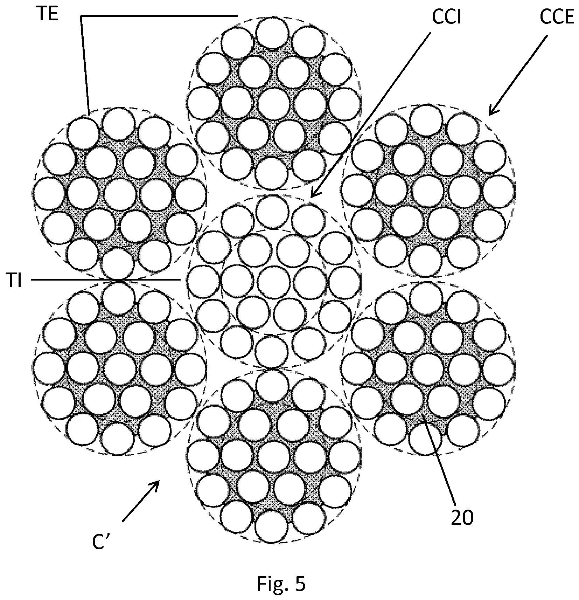

Dans les modes de réalisation de câbles multi-torons gommé in situ C' représentés aux figures 5 à 10, chaque toron interne TI et externe TE est un câble monotoron comprend une couche intermédiaire CT2. La couche intermédiaire du câble CT2 comprend N2 fils intermédiaires enroulés en hélice autour de la couche interne CT1 du câble, les N3 fils externes de la couche externe CT3 du câble étant enroulés en hélice autour de la couche intermédiaire CT2 du câble.

Les câbles multi-torons C' selon l'invention ne sont pas limités à câbles comprenant des torons de structures représentées sur les figures 5 à 10.

Selon des modes de réalisation de l'invention dont des exemples de réalisations sont représentés aux figures 5 à 9 au moins un des torons internes et/ou externes est un câble monotoron selon l'invention, à savoir un câble monotoron gommé in situ avec une composition de caoutchouc comprenant un composé de formule (I) ou (II) ou un sel de ce composé: 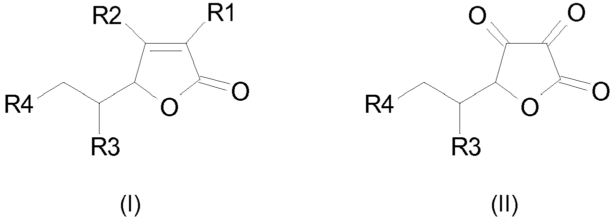 dans laquelle chaque groupe R1, R2, R3 et R4 représente indépendamment l'un de l'autre, un groupe -OH, -O-Alkyl ou -O(C)O-Alkyl.

Selon le mode de réalisation représenté sur la figure 5, chaque toron externe TE est un câble monotoron gommé in situ selon l'invention tel que décrit en référence à la figure 4.

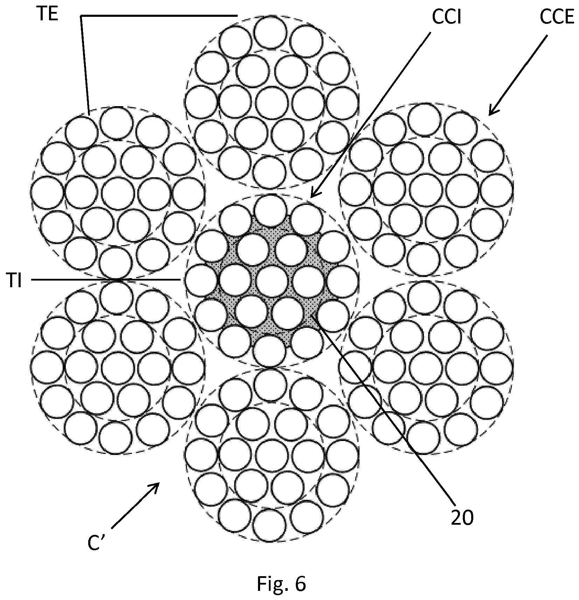

Selon le mode de réalisation représenté sur la figure 6, chaque toron interne TI est un câble monotoron gommé in situ selon l'invention tel que décrit en référence à la figure 4.

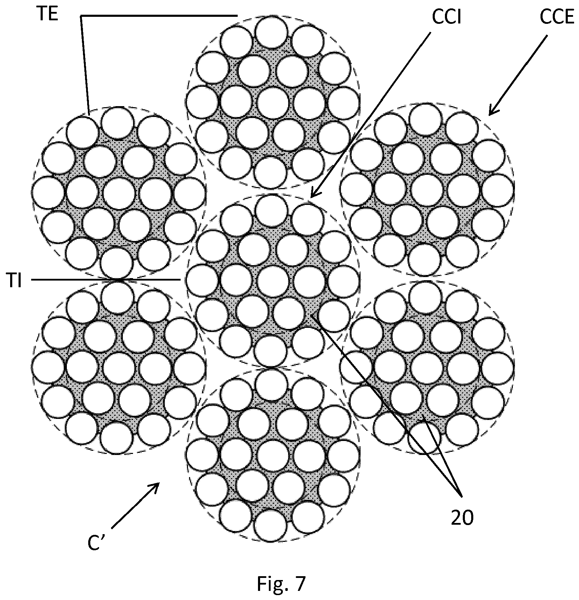

Selon le mode de réalisation représenté sur la figure 7, chaque torons externe TE et chaque toron interne TI est un câble monotoron gommé in situ selon l'invention tel que décrit en référence à la figure 4.

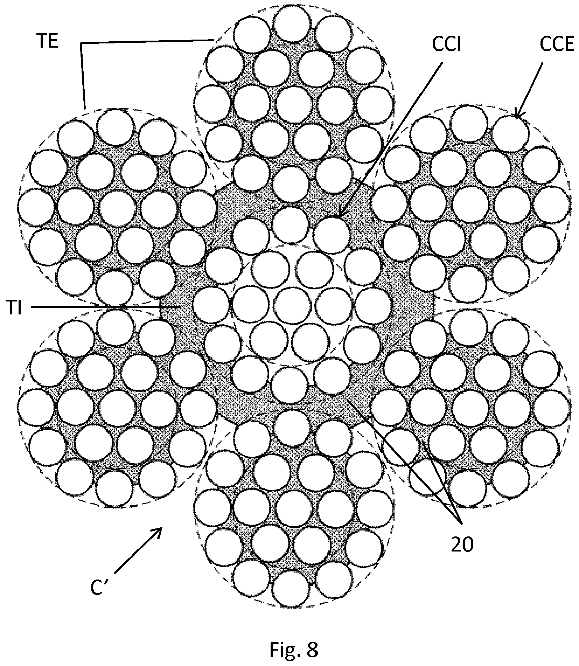

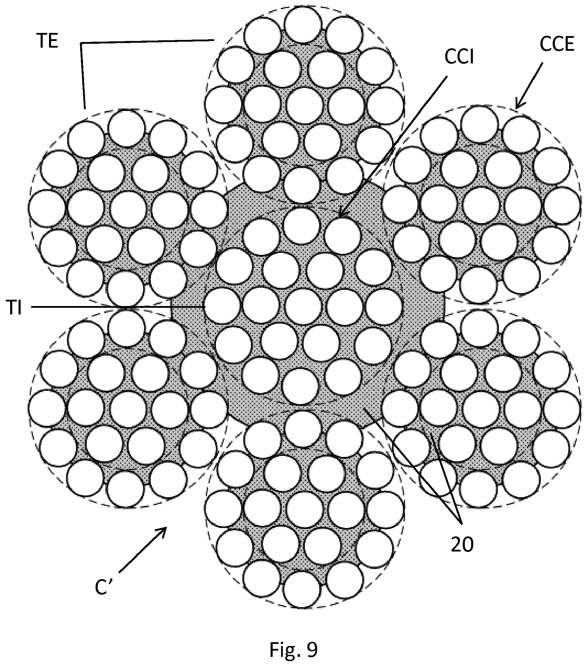

Selon des modes de réalisation représentés aux figures 8 et 9, les câbles multi-torons selon l'invention peuvent comprendre une composition de caoutchouc de gommage 20 disposée entre la couche interne CCI du toron interne TI du câble et la couche externe CCE des torons externes TE du câble, la composition de caoutchouc de gommage 20 comprenant un composé de formule (I) ou (II) ou un sel de ce composé: 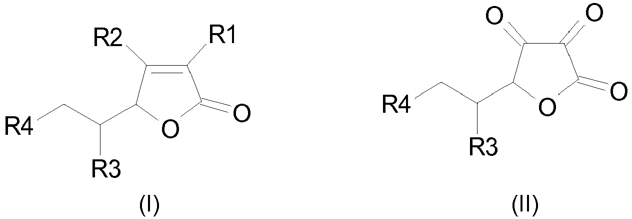 dans laquelle chaque groupe R1, R2, R3 et R4 représente indépendamment l'un de l'autre, un groupe -OH, -O-Alkyl ou -O(C)O-Alkyl.

Dans ces exemples, la composition de caoutchouc de gommage 20 est la même que celle décrite précédemment pour les câbles monotorons.

Selon le mode de réalisation représenté sur la figure 8, chaque toron externe TE est un câble monotoron gommé in situ selon l'invention tel que décrit en référence à la figure 4, le toron interne est un toron non gommé in situ et une composition de caoutchouc de gommage 20 comprenant un composé de formule (I) ou (II) ou les sels de ces composés est disposée entre la couche interne du câble CCI et la couche externe du câble CCE. Dans cet exemple, la composition de caoutchouc de gommage 20 disposée entre la couche interne du câble CCI et la couche externe du câble CCE est la même que celle décrite précédemment pour les câbles monotorons.

Selon le mode de réalisation représenté sur la figure 9, chaque toron externe TE et chaque toron interne TI est un câble monotoron gommé in situ selon l'invention et une composition de caoutchouc de gommage 20 comprenant un composé de formule (I) ou (II) ou les sels de ces composés est disposée entre la couche interne du câble CCI et la couche externe du câble CCE. Dans cet exemple, la composition de caoutchouc de gommage 20 disposée entre la couche interne du câble CCI et la couche externe du câble CCE est la même que celle décrite précédemment pour les câbles monotorons.

L'invention se rapporte également à un câble multi-torons gommé in situ C' comprenant au moins :
- une couche interne CCI du câble comprenant T1 toron(s) interne(s) TI,
- une couche externe CCE du câble comprenant T2 torons externes TE enroulés en hélice autour de la couche interne CCI du câble,
- une composition de caoutchouc disposée entre la couche interne CCI du câble et la couche externe CCE du câble, la composition de caoutchouc comprenant un composé de formule (I) ou (II) ou un sel de ce composé: 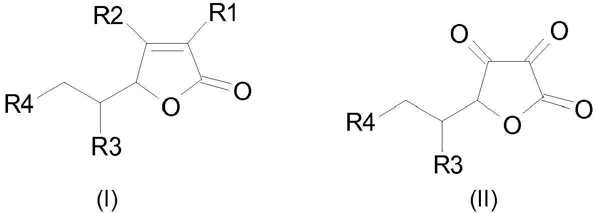 dans laquelle chaque groupe R1, R2, R3 et R4 représente indépendamment l'un de l'autre, un groupe -OH, -O-Alkyl ou -O(C)O-Alkyl.

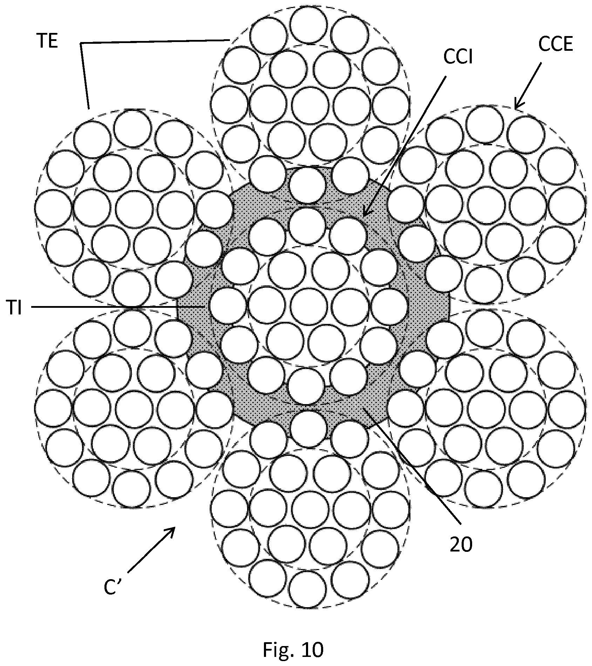

Dans le mode de réalisation représenté sur la figure 10, les torons sont des câbles monotoron non gommé in situ. Une composition de caoutchouc de gommage 20 comprenant un composé de formule (I) ou (II) ou les sels de ces composés est disposée entre la couche interne du câble CCI et la couche externe du câble CCE. De préférence, la composition de caoutchouc de gommage 20 disposée entre la couche interne du câble CCI et la couche externe du câble CCE est la même que celle décrite précédemment pour les câbles monotorons.

L'invention concerne également l'utilisation d'un câble conforme à l'invention pour le renforcement d'articles ou de produits semi-finis en matière plastique et/ou en caoutchouc, par exemple des nappes, des tuyaux, des courroies, des bandes transporteuses, des pneumatiques, plus particulièrement des pneumatiques destinés à des véhicules industriels.

Afin de fabriquer les câbles décrits ci-dessus, on dispose la composition de caoutchouc de gommage 20 conformément aux connaissances générale de l'homme du métier pendant l'assemblage des différentes couches du câble. On fait notamment référence aux publications EP1699973, WO2006/013077, WO2007/090603, WO09/083212, WO09/083213, WO10/012411, WO10/054790, WO10/054791, WO10/112444, WO10/112445, WO10/139583, WO11/000963, WO11/000964, WO11/000950 et WO11/000951.

Le câble de l'invention est tout particulièrement destiné à être utilisé comme élément de renforcement destiné à des véhicules industriels choisis parmi camionnettes, *"Poids-lourd"-* i.e., métro, bus, engins de transport routier (camions, tracteurs, remorques), véhicules hors-la-route-, engins agricoles ou de génie civil, avions, autres véhicules de transport ou de manutention.

Le câble selon l'invention peut être utilisé pour renforcer différentes parties des pneumatiques, notamment des armatures de carcasse, des armatures de sommet de tels pneumatiques, en particulier de pneumatiques industriels tels que Poids-lourd ou génie civil.

L'invention concerne en outre ces articles ou produits semi-finis en matière plastique et/ou en caoutchouc eux-mêmes lorsqu'ils sont renforcés par un câble conforme à l'invention, en particulier les pneumatiques destinés aux véhicules industriels cités ci-dessus, plus particulièrement les pneumatiques Poids-lourd ou génie civil, ainsi que les tissus composites comportant une matrice de composition de caoutchouc de calandrage renforcée d'un câble gommé in situ selon l'invention, utilisables comme nappe d'armature de carcasse ou de sommet de tels pneumatiques.

### TESTS COMPARATIFS

On a comparé une composition « Témoin » conforme à l'état de la technique connu de l'homme du métier dépourvue d'inhibiteur de corrosion et une composition « Invention » de gommage telle que décrite ci-dessus.

Les quantités des composants des compositions « Témoin » et « Invention » sont rassemblées dans le tableau 1 ci-dessous et sont exprimées en parties pour 100 parties en poids d'élastomère (pce).

**Tableau 1**

| **Composition** | **Témoin** | **Invention** |
|---|---|---|
| Elastomère diénique | 100 | 100 |
| Silice | 40 | 40 |
| Anti-oxydant | 2 | 2 |
| Organosilane | 4 | 4 |
| Sel de cobalt | 1 | 1 |
| ZnO | 8 | 8 |
| Acide stéarique | 1 | 1 |
| Soufre | 6 | 6 |
| Accélérateur | 1 | 1 |
| Retardateur | 0,2 | 0,2 |
| Inhibiteur de corrosion | 0 | 0,5 |

### Compositions testées

L'inhibiteur de corrosion de la composition « Invention » est conforme à la formule (I). Il s'agit en l'espèce de l'acide L-ascorbique de formule (III) ci-dessous.

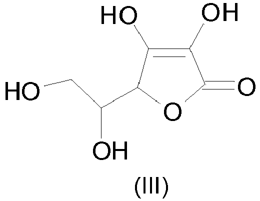

La composition « Invention » comprend au plus 2 pce borne incluse, de préférence au plus 1 pce borne incluse et plus préférentiellement au plus 0,7 pce borne incluse du composé de formule (III).

Dans les compositions du tableau 1, l'élastomère diénique est du caoutchouc naturel. La silice est une silice type"HD"-"Zeosil 1165MP"de la société RHODIA. Le noir de carbone est du type N330. L'anti-oxydant est le N-1, 3-diméthylbutyl-N-phényl-para-phénylènediamine ("Santoflex 6-PPD"de la société FLEXSYS). L'organosilane est le TESPT ("Si69" de la société DEGUSSA). Le sel de cobalt est le naphténate de cobalt. L'accélérateur de vulcanisation est le N-cyclohexyl-2-benzothiazyl-sulfénamide ("Santocure CBS" de la société FLEXSYS). Le retardateur de vulcanisation de la composition T est le N-(Cyclohexylthio)phthalimide (n°CAS 17796-82-6).

### Préparation des compositions testées

Les compositions sont fabriquées dans des mélangeurs appropriés, en utilisant deux phases de préparation successives bien connues de l'homme du métier: une première phase de travail ou malaxage thermo-mécanique (parfois qualifiée de phase"non-productive") à haute température, jusqu'à une température maximale (notée Tmax) comprise entre 110°C et 190°C, de préférence entre 130°C et 180°C, suivie d'une seconde phase de travail mécanique (parfois qualifiée de phase"productive") à plus basse température, typiquement inférieure à 110°C, par exemple entre 60°C et 100°C, phase de finition au cours de laquelle est incorporé le système de réticulation ou vulcanisation ; de telles phases ont été décrites par exemple dans les documents précités EP 501227, EP 735088, WO00/05300, WO00/05301 ou WO02/083782.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante et agent de couplage), puis dans un deuxième temps, par exemple après une à deux minutes de malaxage, les éventuels agents de mise en oeuvre complémentaires et autres additifs divers, à l'exception du système de vulcanisation. Lorsque la densité apparente de la charge inorganique renforçante est faible (cas général des silices), il peut être avantageux de fractionner son introduction en deux ou plusieurs parties. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors, si nécessaire, le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille, d'une plaque ou encore extrudée, par exemple pour former un profilé de caoutchouc.

La vulcanisation (ou cuisson) est conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté, de la cinétique de vulcanisation de la composition considérée ou de la taille du pneumatique.

### Test d'adhésion

On réalise un test d'arrachement conformément à la norme ASTM D2229 sur des éprouvettes comprenant des câbles métalliques de structure 2.30NF dont une portion est intercalée entre deux bandes réalisées dans la composition de caoutchouc préparée et une autre portion est laissée libre.

On mesure la force nécessaire pour arracher le câble des deux bandes de caoutchouc. On réalise la mesure pour 15 câbles. La valeur retenue est la moyenne des mesures sur ces 15 câbles. Plus la valeur de la force est élevée plus l'adhésion entre le câble et la composition de caoutchouc est grande.

Si, pour la composition testée, la force nécessaire à l'arrachement est supérieure à la force nécessaire à l'arrachement des câbles de l'éprouvette témoin, l'adhésion des câbles à la composition de caoutchouc testée est meilleure que celle de l'éprouvette témoin et donc la valeur relative retenue est supérieure à 100 (la valeur relative de l'éprouvette témoin est égale à 100). A l'inverse, si, pour une composition donnée, la force nécessaire à l'arrachement est inférieure à la force nécessaire à l'arrachement des câbles de l'éprouvette témoin, l'adhésion des câbles à la composition de caoutchouc testée est moins bonne que celle de l'éprouvette témoin et donc la valeur relative retenue est inférieure à 100.

Le test d'adhésion décrit ci-dessus est réalisé avec des éprouvettes vulcanisées et/ou vieillies dans différentes conditions A, B, C, D, E et F.

La condition A (cuisson normale) correspond à un test effectué sur une éprouvette cuite pendant une durée inférieure à 1 heure à une température supérieure à 100°C.

F01271f01281 La condition B (surcuisson) correspond à un test effectué sur une éprouvette cuite pendant une durée supérieure à 1 h à une température supérieure à 100°C.

La condition C (vieillissement humide à cru) correspond à un test effectué sur une éprouvette comprenant la composition crue et vieillie pendant plusieurs jours à une température supérieure à 30°C et à plus de 50% d'humidité relative.

La condition D (vieillissement sous atmosphère corrosive) correspond à un test effectué sur une éprouvette comprenant la composition crue et vieillie pendant plusieurs jours dans une solution de NaCl.

La condition E (vieillissement vapeur) correspond à un test effectué sur une éprouvette comprenant la composition crue et vieillie pendant plusieurs heures à une température supérieure à 100°C.

La condition F (vieillissement humide à cuit) correspond à un test effectué sur une éprouvette cuite pendant une durée inférieure à 1 heure à une température supérieure à 100°C et vieillie pendant plusieurs jours à une température supérieure à 30°C et à plus de 50% d'humidité relative.

On comprendra que plus l'adhésion mesurée est élevée, meilleure est la performance anti-corrosive de la composition de gommage et donc meilleure sont les propriétés d'endurance en fatigue-fretting et de résistance aux agressions du pneumatique comprenant un câble comprenant une telle composition de gommage.

On a rassemblé les résultats du test d'adhésion dans les différentes conditions dans le tableau 2 ci-dessous.

**Tableau 2**

| | **T** | **Invention** |
|---|---|---|
| **A** | 100 | 100 |
| **B** | 100 | 100 |
| **C** | 100 | 100 |
| **D** | 100 | 113 |
| **E** | 100 | 100 |
| **F** | 100 | 110 |

La composition « Invention » présente des performances d'adhésion au moins équivalentes à la composition T de l'état de la technique quelles que soient les conditions de test sauf en conditions D (vieillissement sous atmosphère corrosive) et F (vieillissement humide à cuit), conditions pour lesquelles la composition « Invention » présente des propriétés d'adhésion supérieures à celles de la composition T de l'état de la technique. La composition « Invention » permet donc d'inhiber la corrosion créée par les agents corrosifs des conditions D et F.

### Propriétés avant cuisson

### Plasticité Mooney

La plasticité Mooney est réalisée en utilisant un consistomètre selon la norme ASTM D 1646-99. La mesure de plasticité Mooney se fait selon le principe suivant : le mélange généralement cru est moulé dans une enceinte cylindrique chauffée à une température donnée, usuellement 100°C et ici 60°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### Propriétés après cuisson

### Essais de traction

Ces essais de traction permettent de déterminer les contraintes d'élasticité et les propriétés à la rupture des compositions de gomme. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 10% d'allongement (notés MA10), à 100% d'allongement (notés MA100) et à 300% d'allongement (notés MA300).

Les contraintes à la rupture (en MPa) et les allongements à la rupture (en %) sont mesurés à 23°C ± 2°C, et dans les conditions normales d'hygrométrie (50 ± 5% d'humidité relative).

On a rassemblé les résultats des mesures de propriétés avant et après cuisson des différentes compositions dans le tableau 3 ci-dessous.

**Tableau 3**

| **Composition** | **T** | **Invention** |
|---|---|---|
| **Propriétés avant cu isson** | | |
| Mooney (UM) | 85,10 | 87,50 |

| **Propriétés après et cuisson** | | |
|---|---|---|
| MA10 (MPa) | 8,51 | 8,12 |
| MA100 (MPa) | 3,49 | 3,46 |
| MA300 (MPa) | 3,35 | 3,35 |

La plasticité Mooney et les modules sécants nominaux à 10%, 100% et 300% de la composition « Invention » sont peu modifiés par rapport à ceux de la composition T.

Bien entendu, l'invention n'est pas limitée aux exemples de réalisation précédemment décrits.

On pourra prévoir de mélanger plusieurs inhibiteurs de corrosion.

Par exemple que certains fils pourraient être à section non circulaire, par exemple déformé plastiquement, notamment à section sensiblement ovale ou polygonale, par exemple triangulaire, carrée ou encore rectangulaire.

Les fils, de section circulaire ou non, par exemple un fil ondulé, pourront être vrillés, tordus en forme d'hélice ou en zig-zag. Dans de tels cas, il faut bien sûr comprendre que le diamètre du fil représente le diamètre du cylindre de révolution imaginaire qui entoure le fil (diamètre d'encombrement), et non plus le diamètre (ou toute autre taille transversale, si sa section n'est pas circulaire) du fil d'âme lui-même.

Pour des raisons de faisabilité industrielle, de coût et de performance globale, on préfère mettre en oeuvre l'invention avec des fils linéaires, c'est-à-dire droit, et de section transversale conventionnelle circulaire.

On pourra également envisager un câble multitorons gommé in situ conforme à l'invention et de structure 1xN dans laquelle N représente le nombre de torons enroulés ensemble en hélice.

On pourra également combiner les caractéristiques des différents modes de réalisation décrits ou envisagés ci-dessus sous réserve que celles-ci soient compatibles entre elles.

## Revendications

1. Câble monotoron gommé in situ (C) comprenant :
- une couche interne du câble (CT1) comprenant N1 fil(s) interne(s),
- une couche externe du câble (CT3) comprenant N3 fils externes enroulés en hélice autour de la couche interne du câble,
- une composition de caoutchouc (20) disposée entre la couche interne du câble et la couche externe du câble,
**caractérisé en ce que** la composition de caoutchouc (20) comprend un composé de formule (I) ou (II) ou un sel de ce composé: 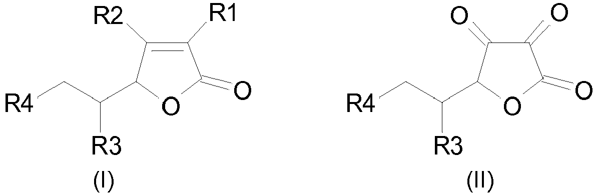 dans laquelle chaque groupe R1, R2, R3 et R4 représente indépendamment l'un de l'autre, un groupe -OH, -O-Alkyl ou -O(C)O-Alkyl.

2. Câble monotoron gommé in situ (C) selon la revendication précédente, dans lequel R1=R2.

3. Câble monotoron gommé in situ (C) selon la revendication précédente, dans lequel R1 et R2 représentent le groupe -OH.

4. Câble monotoron gommé in situ (C) selon l'une quelconque des revendications précédentes, dans lequel R3=R4.

5. Câble monotoron gommé in situ (C) selon la revendication précédente, dans lequel R3 et R4 représentent le groupe -OH.

6. Câble monotoron gommé in situ (C) selon l'une quelconque des revendications précédentes, dans lequel le composé de formule (I) est l'acide ascorbique, et de préférence, l'acide L-ascorbique.

7. Câble monotoron gommé in situ (C) selon l'une quelconque des revendications précédentes, dans lequel la composition de caoutchouc (20) comprend au plus 2 parties en poids pour cent parties d'élastomère (pce) borne incluse, de préférence au plus 1 pce borne incluse et plus préférentiellement au plus 0,7 pce borne incluse du composé de formule (I) ou (II) ou un sel de ce composé.

8. Câble monotoron gommé in situ (C) selon l'une quelconque des revendications 1 à 7, dans lequel la composition de caoutchouc (20) est présente dans chacun des capillaires situés entre le ou les N1 fil(s) interne(s) de la couche interne (CT1) et les N3 fils externes de la couche externe (CT3).

9. Câble monotoron gommé in situ (C) selon l'une quelconque des revendications 1 à 7, comprenant une couche intermédiaire du câble (CT2) comprenant N2 fils intermédiaires enroulés en hélice autour de la couche interne (CT1) du câble, les N3 fils externes de la couche externe (CT3) du câble étant enroulés en hélice autour de la couche intermédiaire (CT2) du câble,
dans lequel la composition de caoutchouc (20) est présente dans chacun des capillaires situés entre le ou les N1 fil(s) interne(s) de la couche interne (CT1) et les N2 fils intermédiaires de la couche intermédiaire (CT2) et/ou
dans lequel la composition de caoutchouc (20) est présente dans chacun des capillaires situés entre les N2 fils intermédiaires de la couche intermédiaire (CT2) et les N3 fils externes de la couche externe (CT3).

10. Câble multi-torons gommé in situ (C'), **caractérisé en ce qu'**il comprend au moins un toron étant un câble monotoron gommé in situ (C) selon l'une quelconque des revendications précédentes.

11. Câble multi-torons gommé in situ (C'), **caractérisé en ce qu'**il comprend:
- une couche interne du câble (CCI) comprenant T1 toron(s) interne(s) (TI),
- une couche externe du câble (CCE) comprenant T2 torons externes (TE) enroulés en hélice autour de la couche interne (CCI) du câble,
- au moins un des torons interne et/ou externe étant un câble monotoron gommé in situ (C) tel que défini à l'une quelconque des revendications 1 à 9.

12. Câble multi-torons gommé in situ (C') selon la revendication précédente, comprenant une composition de caoutchouc (20) disposée entre la couche interne (CCI) des T1 toron(s) interne(s) (TI) du câble et la couche externe (CCE) des T2 torons externes (TE) du câble, la composition de caoutchouc (20) comprenant un composé de formule (I) ou (II) ou un sel de ce composé: 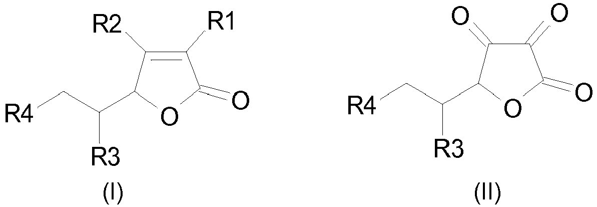 dans laquelle chaque groupe R1, R2, R3 et R4 représente indépendamment l'un de l'autre, un groupe -OH, -O-Alkyl ou -O(C)O-Alkyl.

13. Câble multi-torons gommé in situ (C'), **caractérisé en ce qu'**il comprend :
- une couche interne (CCI) du câble comprenant T1 toron(s) interne(s) (TI),
- une couche externe (CCE) du câble comprenant T2 torons externes (TE) enroulés en hélice autour de la couche interne (CCI) du câble,
- une composition de caoutchouc (20) disposée entre la couche interne (CCI) du câble (C') et la couche externe (CCE) du câble, la composition de caoutchouc (20) comprenant un composé de formule (I) ou (II) ou un sel de ce composé: 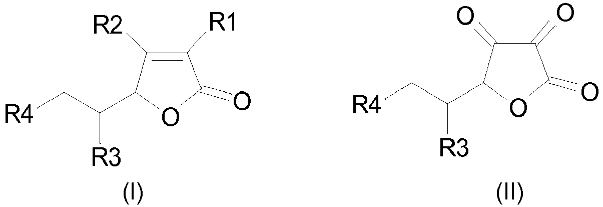 dans laquelle chaque groupe R1, R2, R3 et R4 représente indépendamment l'un de l'autre, un groupe -OH, -O-Alkyl ou -O(C)O-Alkyl.

14. Utilisation d'un câble monotoron gommé in situ (C) selon l'une quelconque des revendications 1 à 9 ou d'un câble multi-torons gommé in situ (C') selon l'une quelconque des revendications 10 à 13 pour le renforcement d'un article ou produit semi-fini en caoutchouc.

15. Pneumatique comprenant un câble monotoron gommé in situ (C) selon l'une quelconque des revendications 1 à 9 ou d'un câble multi-torons gommé in situ (C') selon l'une quelconque des revendications 10 à 13.

## Patentansprüche

1. In situ gummiertes einlitziges Seil (C), umfassend:
- eine Seil-Innenschicht (CT1) mit N1 inneren Drähten,
- eine Seil-Außenschicht (CT3) mit N3 äußeren Drähten, die spiralförmig um die Seil-Innenschicht gewickelt sind,
- eine Kautschukzusammensetzung (20), die zwischen der Seil-Innenschicht und der Seil-Außenschicht angeordnet ist,
**dadurch gekennzeichnet, dass** die Kautschukzusammensetzung (20) eine Verbindung mit der Formel (I) oder (II) oder ein Salz dieser Verbindung umfasst: 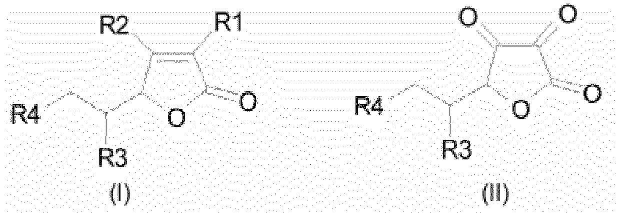 wobei jede Gruppe R1, R2, R3 und R4 unabhängig voneinander eine Gruppe -OH, -O-Alkyl oder -O(C)O-Alkyl darstellt.

2. In situ gummiertes einlitziges Seil (C) nach dem vorhergehenden Anspruch, wobei R1=R2.

3. In situ gummiertes einlitziges Seil (C) nach dem vorhergehenden Anspruch, wobei R1 und R2 die Gruppe -OH darstellen.

4. In situ gummiertes einlitziges Seil (C) nach einem der vorhergehenden Ansprüche, wobei R3=R4.

5. In situ gummiertes einlitziges Seil (C) nach dem vorhergehenden Anspruch, wobei R3 und R4 die Gruppe -OH darstellen.

6. In situ gummiertes einlitziges Seil (C) nach einem der vorhergehenden Ansprüche, wobei die Verbindung mit der Formel (I) Ascorbinsäure und vorzugsweise L-Ascorbinsäure ist.

7. In situ gummiertes einlitziges Seil (C) nach einem der vorhergehenden Ansprüche, wobei die Kautschukzusammensetzung (20) höchstens 2 Gewichtsteile, Grenzwert eingeschlossen, der Verbindung mit der Formel (I) oder (II) oder eines Salzes dieser Verbindung auf einhundert Elastomerteile (pce) einschließlich Anschluss, vorzugsweise höchstens 1 pce, Grenzwert eingeschlossen, und bevorzugter höchstens 0,7 pce, Grenzwert eingeschlossen, umfasst.

8. In situ gummiertes einlitziges Seil (C) nach einem der Ansprüche 1 bis 7, wobei die Kautschukzusammensetzung (20) in jedem der Hohlräume vorhanden ist, die sich zwischen dem oder den N1 inneren Drähten der Innenschicht (CT1) und den N3 äußeren Drähten der Außenschicht (CT3) befinden.

9. In situ gummiertes einlitziges Seil (C) nach einem der Ansprüche 1 bis 7, das eine Seilzwischenschicht (CT2) umfasst, die N2 Zwischendrähte umfasst, die spiralförmig um die Innenschicht (CT1) des Seils gewickelt sind, wobei die N3 äußeren Drähte der Außenschicht (CT3) des Seils spiralförmig um die Zwischenschicht (CT2) des Seils gewickelt sind, wobei die Kautschukzusammensetzung (20) in jedem der Hohlräume vorhanden ist, die sich zwischen dem oder den N1 inneren Drähten der Innenschicht (CT1) und den N2 Zwischendrähten der Zwischenschicht (CT2) befinden, und/oder wobei die Kautschukzusammensetzung (20) in jedem der Hohlräume vorhanden ist, die sich zwischen den N2 Zwischendrähten der Zwischenschicht (CT2) und den N3 äußeren Drähten der Außenschicht (CT3) befinden.

10. In situ gummiertes mehrlitziges Seil (C'), **dadurch gekennzeichnet, dass** es mindestens eine Litze umfasst, die ein in situ gummiertes einlitziges Seil (C) nach einem der vorhergehenden Ansprüche ist.

11. In situ gummiertes mehrlitziges Seil (C'), **dadurch gekennzeichnet, dass** es Folgendes umfasst:
- eine Seil-Innenschicht (CCI) mit T1 inneren Litzen (TI),
- eine Seil-Außenschicht (CCE) mit T2 äußeren Litzen (TE), die spiralförmig um die Seil-Innenschicht (CCI) gewickelt sind,
- wobei mindestens eine der inneren und/oder äußeren Litzen ein in situ gummiertes einlitziges Seil (C) nach einem der Ansprüche 1 bis 9 ist.

12. In situ gummiertes mehrlitziges Seil (C') nach dem vorhergehenden Anspruch, das eine Kautschukzusammensetzung (20) umfasst, die zwischen der Innenschicht (CCI) aus den T1 inneren Litzen (TI) des Seils und der Außenschicht (CCE) aus den T2 äußeren Litzen (TE) des Seils angeordnet ist, wobei die Kautschukzusammensetzung (20) eine Verbindung mit der Formel (I) oder (II) oder ein Salz dieser Verbindung umfasst: 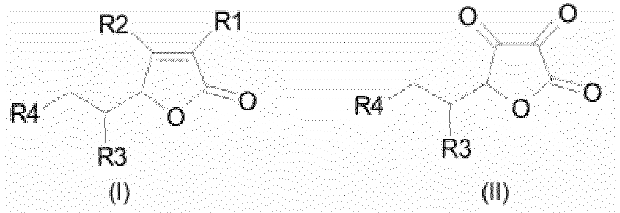 wobei jede Gruppe R1, R2, R3 und R4 unabhängig voneinander eine Gruppe -OH, -O-Alkyl oder -O(C)O-Alkyl darstellt.

13. In situ gummiertes mehrlitziges Seil (C'), **dadurch gekennzeichnet, dass** es Folgendes umfasst:
- eine Seil-Innenschicht (CCI) mit T1 inneren Litzen (TI),
- eine Seil-Außenschicht (CCE) mit T2 äußeren Litzen (TE), die spiralförmig um die Seil-Innenschicht (CCI) gewickelt sind,
- eine Kautschukzusammensetzung (20), die zwischen der Innenschicht (CCI) des Seils (C') und der Außenschicht (CCE) des Seils angeordnet ist, wobei die Kautschukzusammensetzung (20) eine Verbindung mit der Formel (I) oder (II) oder ein Salz dieser Verbindung umfasst: 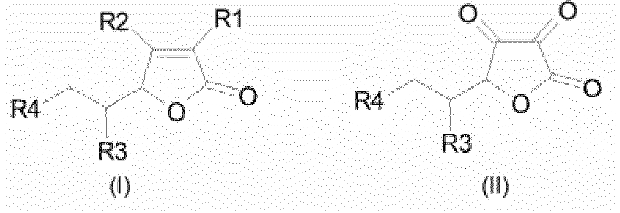 wobei jede Gruppe R1, R2, R3 und R4 unabhängig voneinander eine Gruppe -OH, -O-Alkyl oder -O(C)O-Alkyl darstellt.

14. Verwendung von mindestens einem in situ gummierten einlitzigen Seil (C) nach einem der Ansprüche 1 bis 9 oder von einem in situ gummierten mehrlitzigen Seil (C') nach einem der Ansprüche 10 bis 13 zur Verstärkung eines Halbzeugs oder Halberzeugnisses aus Kautschuk.

15. Reifen, der ein in situ gummiertes einlitziges Seil (C) nach einem der Ansprüche 1 bis 9 oder ein in situ gummiertes mehrlitziges Seil (C') nach einem der Ansprüche 10 bis 13 umfasst.

## Claims

1. Single-strand cord rubberized in situ (C) comprising:
- an internal layer of the cord (CT1) comprising N1 internal thread(s),
- an external layer of the cord (CT3) comprising N3 external threads wound helically around the internal layer of the cord,
- a rubber composition (20) positioned between the internal layer of the cord and the external layer of the cord,
**characterized in that** the rubber composition (20) comprises a compound of formula (I) or (II) or a salt of this compound: 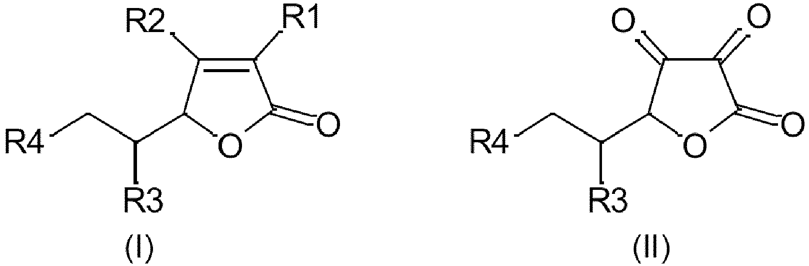 in which each R1, R2, R3 and R4 group represents, independently of one another, an -OH, -O-Alkyl or -O(C)O-Alkyl group.

2. Single-strand cord rubberized in situ (C) according to the preceding claim, in which R1 =R2.

3. Single-strand cord rubberized in situ (C) according to the preceding claim, in which R1 and R2 represent the -OH group.

4. Single-strand cord rubberized in situ (C) according to any one of the preceding claims, in which R3=R4.

5. Single-strand cord rubberized in situ (C) according to the preceding claim, in which R3 and R4 represent the -OH group.

6. Single-strand cord rubberized in situ (C) according to any one of the preceding claims, in which the compound of formula (I) is ascorbic acid acid and preferably L-ascorbic acid.

7. Single-strand cord rubberized in situ (C) according to any one of the preceding claims, in which the rubber composition (20) comprises at most 2 part per hundred rubber (phr), limit included, preferably at most 1 phr, limit included, and more preferably at most 0.7 phr, limit included, of the compound of formula (I) or (II) or a salt of this compound.

8. Single-strand cord rubberized in situ (C) according to any one of Claims 1 to 7, in which the rubber composition (20) is present in each of the capillaries located between the N1 internal thread(s) of the internal layer (CT1) and the N3 external threads of the external layer (CT3).

9. Single-strand cord rubberized in situ (C) according to any one of Claims 1 to 7, comprising an intermediate layer of the cord (CT2) comprising N2 intermediate threads wound helically around the internal layer (CT1) of the cord, the N3 external threads of the external layer (CT3) of the cord being wound helically around the intermediate layer (CT2) of the cord, in which the rubber composition (20) is present in each of the capillaries located between the N1 internal thread(s) of the internal layer (CT1) and the N2 intermediate threads of the intermediate layer (CT2) and/or in which the rubber composition (20) is present in each of the capillaries located between the N2 intermediate threads of the intermediate layer (CT2) and the N3 external threads of the external layer (CT3).

10. Multistrand rope rubberized in situ (C'), **characterized in that** it comprises at least one strand which is a single-strand cord rubberized in situ (C) according to any one of the preceding claims.

11. Multistrand rope rubberized in situ (C') according to the preceding claim, comprising:
- an internal layer of the rope (CCI) comprising T1 internal strand(s) (TI),
- an external layer of the rope (CCE) comprising T2 external strands (TE) wound helically around the internal layer (CCI) of the rope,
- at least one of the internal and/or external strands being a single-strand cord rubberized in situ (C) as defined in any one of Claims 1 to 9.

12. Multistrand rope rubberized in situ (C') according to the previous claim, comprising a rubber composition (20) positioned between the internal layer (CCI) of the T1 internal strand(s) (TI)of the rope and the external layer (CCE) of the T2 external strands (TE) of the rope, the rubber composition (20) comprising a compound of formula (I) or (II) or a salt of this compound: 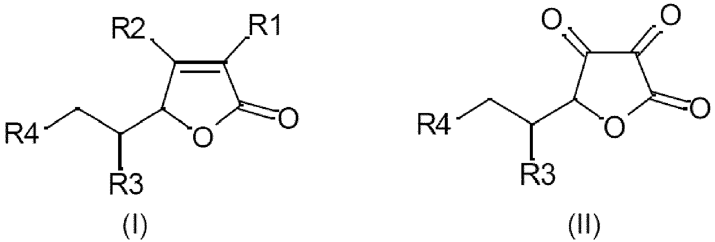 in which each R1, R2, R3 and R4 group represents, independently of one another, an -OH, -O-Alkyl or- O(C)O-Alkyl group.

13. Multistrand rope rubberized in situ (C'), **characterized in that** it comprises:
- an internal layer (CCI) of the rope comprising T1 internal strand(s) (TI),
- an external layer (CCE) of the rope comprising T2 external strands (TE) wound helically around the internal layer (CCI) of the rope,
- a rubber composition (20) positioned between the internal layer (CCI) of the rope (C') and the external layer (CCE) of the rope, the rubber composition (20) comprising a compound of formula (I) or (II) or a salt of this compound: 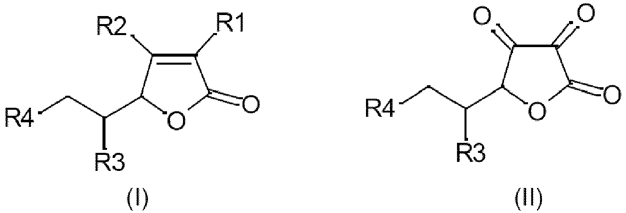 in which each R1, R2, R3 and R4 group represents, independently of one another, an -O-, -O-Alkyl or -O(C)O-Alkyl group.

14. Use of a single-strand cord rubberized in situ (C) according to any one of Claims 1 to 9 or of a multistrand rope rubberized in situ (C') according to any one of Claims 10 to 13 for the reinforcing of a semi-finished product or article made of rubber.

15. Tyre comprising a single-strand cord rubberized in situ (C) according to any one of Claims 1 to 9 or of a multistrand rope rubberized in situ (C') according to any one of Claims 10 to 13.
